Europäisches Patentamt

European Patent Office

Office européen des brevets

(11) Publication number: **0 293 759 B1**

# EUROPEAN PATENT SPECIFICATION

(45) Date of publication of patent specification: **30.12.92**    (51) Int. Cl.5: **B01D 53/34**, B01J 19/08

(21) Application number: **88108409.9**

(22) Date of filing: **26.05.88**

The file contains technical information submitted
after the application was filed and not included in
this specification

(54) An exhaust gas treatment process using irradiation and apparatus for same.

(30) Priority: **01.06.87 US 55969**

(43) Date of publication of application:
**07.12.88 Bulletin  88/49**

(45) Publication of the grant of the patent:
**30.12.92 Bulletin  92/53**

(84) Designated Contracting States:
**DE GB IT**

(56) References cited:
**DE-A- 3 608 291**
**DE-A- 3 622 621**
**FR-A- 2 213 795**

(73) Proprietor: **EBARA CORPORATION**
**11-1, Haneda Asahi-cho**
**Ota-ku Tokyo, 144(JP)**

(72) Inventor: **Kawamura, Keita**
**6-32-3, Shonandai**
**Fujisawa-shi Kanagawa-ken(JP)**
Inventor: **Hirano, Shinichi**
**3-19-4, Shimomeguro**
**Meguro-ku Tokyo(JP)**

(74) Representative: **Nöth, Heinz, Dipl.-Phys. et al**
**Patentanwälte Pfenning, Meinig & Partner**
**Mozartstrasse 17**
**W-8000 München 2(DE)**

## Description

This invention relates to a process for removing noxious ingredients from an exhaust gas containing $SO_x$ and/or $NO_x$ by adding ammonia to the exhaust gas and irradiating the exhaust gas with ionizing radiation or ultraviolet light.

Problems in the prior art are hereinafter described. It is well known to add a certain amount of ammonia necessary to remove noxious ingredients to an exhaust gas containing noxious ingredients such as $SO_x$ and/or $NO_x$ and to treat the gas with radiation in order to collect the noxious ingredients as ammonium sulphate and/or ammonium nitrate. In this process, an electrostatic precipitator or a bag filter such as a dust collecting filter or the like is used individually to collect particles of ammonium sulphate or ammonium nitrate (DE-A-3 608 291).

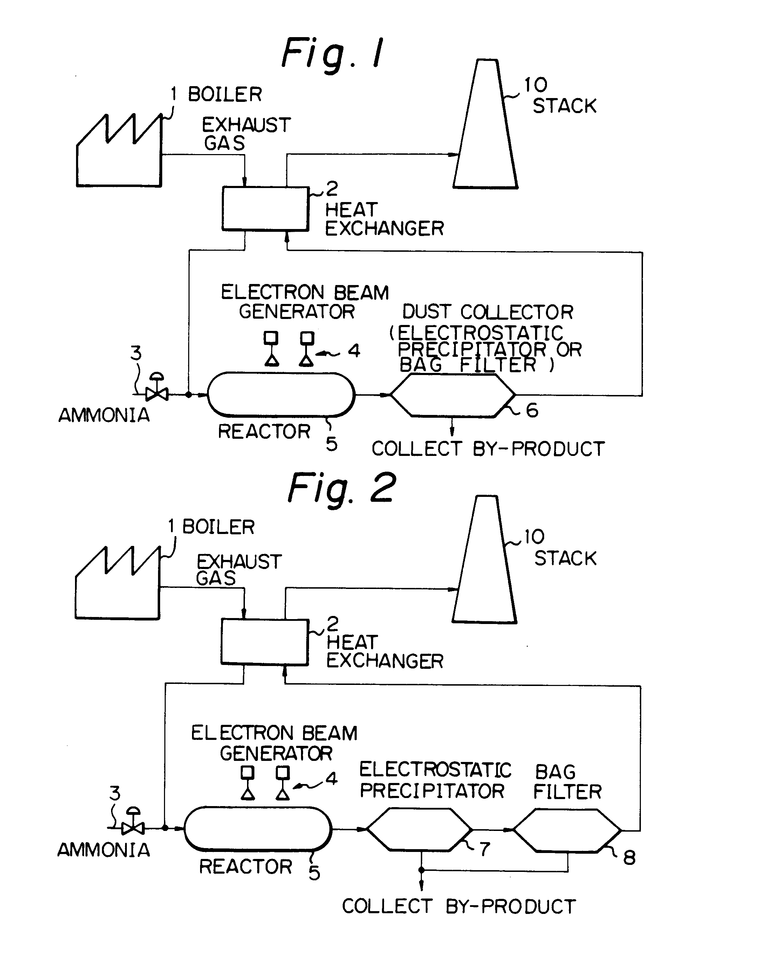

An example of this prior art will be described with reference to Fig. 1 of the drawings. An exhaust gas generated at a boiler 1 and containing $SO_x$ and/or $NO_x$ is cooled down by a cooling tower or a heat exchanger 2 and ammonia is added to the gas by an ammonia feed conduit 3. Then the exhaust gas is fed into a reactor 5 where it is irradiated by an electron beam or other radiation from an electron beam generator or another radiation source 4 to convert the $SO_x$ and/or $NO_x$ into solid particles of ammonium sulphate and/or ammonium nitrate which are collected by an electrostatic precipitator.

The quantity of ammonia added is calculated on the basis of the quantity of the exhaust gas and the concentration of $SO_x$ and/or $NO_x$ contained therein.

$$\text{Quantity of NH}_3 \text{ addition} = K\ Q[(NO_x) + 2(SO_x)]$$

In the above equation, K is an ammonia addition constant and is determined by desulphurization efficiency and denitration efficiency. For example, in a case where both the denitration and desulphurization efficiency are 100%, K is 1. Q is the quantity of exhaust gas, $(NO_x)$ is the entrance $NO_x$ concentration and $(SO_x)$ is the entrance $SO_x$ concentration.

If a sudden change occurs in the concentration of $SO_x$ and/or $NO_x$ due to a change in operation of the exhaust gas generator, the higher the concentration of $SO_x$ and/or $NO_x$ and the higher the desulphurization efficiency and/or denitration efficiency, the greater the required quantity of ammonia to be added. Therefore, the absolute amount of the quantity of ammonia to be added is increased in order to meet this change. Consequently, under certain operating conditions, there may be cases which do not satisfy the conditions required for an exhaust gas treatment apparatus such as a decrease in the noxious ingredient removal rate or leakage of excess ammonia to the outside or the like.

As an actual example, where the entrance $SO_x$ concentration is 1,000 ppm and the entrance $NO_x$ concentration is 200 ppm, from the above equation, 2,200 ppm of ammonia is needed in order to collect all the noxious ingredients as ammonium sulphate and ammonium nitrate. If the desulphurization efficiency and the denitration efficiency are 90%, respectively, the theoretical quantity of ammonium becomes about 2,000 ppm. In other words, the quantity of ammonia to be added is about 2,000 - 2,200 ppm when the desulphurizaion efficiency and the denitration efficiency are between 90 and 100%, respectively, thereby causing a difference of 200 ppm. Further, if the entrance $SO_x$ concentration increases to 2,000 ppm, the quantity of ammonia to be added must be increased to about 3,800 ppm for a desulphurization efficiency and denitration efficiency of 90%. Then, due to the time that the exhaust gas takes to reach this apparatus from the boiler and the response time of the detector for $SO_x$ and $NO_x$, the volume of unreacted $SO_x$ and $NO_x$ increases and there will be cases where this apparatus does not meet the conditions required of it as an environmental protection apparatus. Conversely, where the quantity of ammonia to be added decreases, the amount of ammonia which leaks will increase. The conditions for an environmental protection apparatus differ according to the specific environment; however, strict conditions, such as a desulphurization efficiency of 90% or more and a denitration efficiency of 80% or more and maximum ammonia leakage of 10 - 50 ppm are ordinarily desired.

Moreover, since the ammonium sulphate and/or ammonium nitrate generated by the irradiation treatment after ammonia addition in the reactor 5 are in the form of very small, powder-like particles and have high adhesivity and hygroscopicity, careful consideration must be given to the selection of a dust collector 6. In the prior art, an electrostatic precipitator or a bag filter is used individually as a dust collector. The particles collected as ammonium sulphate and ammonium nitrate have a specific character such that the particles condense with each other to form larger particles, and also have high adhesivity. Therefore, in the case of a filtering dust collector such as a bag filter, since the filtering resistance will increase in a short period of time, various modifications must be made, such as an extreme enlargement of the filtering area or injection of diatomaceous earth or clay or the like within the exhaust gas in front of the bag filter. These modifications increase both installation and operation costs and are not desirable.

In an electrostatic precipitator, of course, there will be no increase in the filtering resistance, unlike a bag filter. However, the speed of the exhaust gas within the dust collector must be reduced in order to collect the particles and this will increase the installation cost. For instance, in order to keep a dust regulation value of 10 mg/Nm$^3$ or less, the gas speed within the electrostatic precipitator must be 0.3 m/sec or less. Therefore, it has not been economical to use an electrostatic precipitator or a bag filter individually in order to maintain the dust regulation value for outside release.

The present invention relates to a method of treating an exhaust gas containing noxious ingredients such as $SO_x$ and/or $NO_x$ comprising the steps of

- adding ammonia into such a gas;
- irradiating said mixture with ionizing radiation or ultraviolet light, whereby producing a resultant gas containing particulate products;
- passing said resultant gas initially through an electrostatic precipitator at a gas flow speed of about 1 to 3 m/sec., and
  thereafter through a mechanical filter at a speed of about 0.3 to 2 m/min., thereby reacting residual non-reacted $SO_x$ ingredient with residual ammonia to produce additional particles;
- releasing the gas, containing a reduced particle content to the atmosphere.

The invention also relates to an exhaust gas treatment apparatus for an exhaust gas containing $SO_x$ and/or $NO_x$ comprising:

- means (4,5) for irradiating the exhaust gas with ionizing radiation or ultraviolet light in the presence of ammonia to produce particulates;
- an electrostatic precipitator (7) connected to said means (4,5) for irradiation wherein the exhaust gas speed in the electrostatic precipitator is about 1 - 3 m/sec.;
- a mechanical filter (8) connected to and arranged downstream of said electrostatic precipitator (7) wherein the exhaust gas speed in the mechanical filter (8) is about 0.3 to 2 m/min. and
- means (10) for releasing the gas to the atmosphere.

While the inventors of the present invention were developing a method to remove solid particles from a reaction gas containing particles of ammonium sulphate and/or ammonium nitrate by irradiating an exhaust gas containing noxious ingredients such as $SO_x$ and/or $NO_x$ in the presence of ammonia, the inventors discovered that by treating the exhaust gas initially with an electrostatic precipitator at a gas flow speed of about 1 to 3 m/sec and thereafter with a mechanical filter at a gas flow speed of about 0.3 to 2 m/min., the solid particles can be removed extremely efficiently and economically.

The inventors also found that the particles collected by a mechanical filter can adsorb $SO_x$ and ammonia which are, in turn, removed by being formed into compounds such as ammonium sulphate with the particles as their medium.

Fig. 1 illustrates a schematic view of prior art; and

Fig. 2 illustrates a schematic view of the present invention.

The present invention is herein described in detail.

One of the elements of the present invention is the process used to produce solid particles mainly of ammonium sulphate and/or ammonium nitrate by an irradiation treatment of an exhaust gas containing noxious ingredients such as $SO_x$ and/or $NO_x$ in the presence of ammonia and, as to this method, well known prior art methods can be used.

The solid particles generated by irradiating an exhaust gas containing noxious ingredients such as $SO_x$ and/or $NO_x$ with ionizing radiation or ultraviolet light in the presence of ammonia are very small particles having high adhesivity and hygroscopicity. However, in order to collect such small particles solely by an electrostatic precipitator so that the exhaust gas meets the required dust regulation value, the gas flow speed within the electrostatic precipitator would have to be kept very low, such as 0.3 m/sec, and, therefore, a large electric dust collector would be required.

If the solid particle are to be collected solely by a mechanical filter such as a bag filter, however, as mentioned above, when the quantity is large, a large filtering area is needed since filtering resistance increases in a short period of time due to the adhesivity of the particles or their tendency to grow while condensing. In the present invention, since a mechanical filter is provided downstream of an electrostatic precipitator, a high gas flow speed of 1 - 3 m/sec can be applied and the filter resistance of the mechanical filter will not increase in a short period of time due to the small quantity of particles supplied therein, thereby avoiding the need for a large filtering area.

As to the mechanical filter, either a bag filter, a membrane filter or other types can be used but a bag filter is preferable in view of its reuse capability. As to filtering speed, in a case where the solid particle concentration is 0.1 - 1 g/m$^3$ at the entrance of the bag filter, it will be 0.5 - 2 m/min (= 1.7 - 6.7 ft/min) and in a case where the concentration is 5 - 10 g/m$^3$, it will be 0.3 - 0.5 m/min (= 1 - 1.7 ft/min).

As mentioned above, the gas flow speed in the electrostatic precipitator in the present invention can be maintained about 1 - 3 m/sec, which is about 3 - 10 times higher than that of the prior art method where only an electrostatic precipitator is used. Therefore, the size of the electrostatic precipitator can be reduced by one-third, thereby enabling the collector to be built in the casing of a mechanical filter.

In an ordinary electrostatic precipitator, a pressure drop of several mmAg is provided at its outlet to rectify the gas flow. However, in a bag filter, Δp, or the pressure drop, at the filtering surface is as much as 100 - 150 mmAg. Therefore, where an electrostatic precipitator is provided within a filter bag, such a rectifier can be eliminated. In other words, a more simple electrostatic precipitator can be used.

The present invention is hereinafter explained with reference to Fig. 2.

An exhaust gas generated by a boiler 1 and containing SO$_x$ and/or NO$_x$ is cooled down by a cooling tower or a heat exchanger 2, injected with a necessary quantity of ammonia from an ammonia feed pipe 3, and fed into a reactor 5 where the exhaust gas is irradiated with an electron beam from an electron beam generator or by another radiation from a UV radiation source 4. The SO$_x$ and/or NO$_x$ contained in the exhaust gas is converted into solid particles mainly of ammonium sulphate and ammonium nitrate, which in turn are fed, first, into an electrostatic precipitator 7, and second into a mechanical filter apparatus 8 in order to collect the solid particles and remaining unreacted ingredients. The exhaust gas is released to the outside from a stack through a heat exchanger 2.

Hereinafter shown are data of the embodiments of the present invention, but are not to be construed as limiting.

Embodiment 1

An exhaust gas of about 7,000 m$^3$/hr containing SO$_2$ in an amount of 1405 ppm and NO$_x$ in an amount of 271 ppm was treated by electron beam radiation quantity of 1.8 Mrad and reactor exit temperature of 60 - 80°C and was fed into an electrostatic precipitator and a bag filter in that order.

Table 1

|  | Exhaust gas condition | Ammonia addition quantity | Electrostatic precipitator exit | Bag filter exit |
|---|---|---|---|---|
| SO$_2$ | 1405 ppm |  | 157 ppm | 17 ppm (desulphurization efficiency 98.8%) |
| NO$_x$ | 271 ppm |  |  | 54 ppm (denitration efficiency 80%) |
| NH$_3$ |  | 3080 ppm | 473 ppm | 9 ppm |
| e-dust efficiency |  |  | about 300 mg/Nm$^3$ | 10 g/Nm$^3$ or less |

Embodiment 2

When the above SO$_2$, NO$_x$ and exhaust gas quantity were changed to 874 ppm, 234 ppm and 6,700 m$^3$/hr, respectively, the ammonia addition quantity was adjusted to 1982 ppm.

Table 2

| | Exhaust gas condition | Ammonia addition quantity | Electrostatic precipitator exit | Bag filter exit |
|---|---|---|---|---|
| SO$_2$ | 874 ppm | | 76 ppm | 12 ppm (desulphurization efficiency 98.6%) |
| NO$_x$ | 234 ppm | | | 23 ppm (denitration efficiency 90%) |
| NH$_3$ | | 1982 ppm | 343 ppm | 2 ppm |
| e-dust efficiency | | | 100 mg/Nm$^3$ or more | 10 g/Nm$^3$ or less |

The filtering speeds at the electrostatic precipitator and the bag filter in Embodiments 1 and 2 were 1.1 m/sec and 0.5 m/min respectively.

From the relationship between the concentration of SO$_2$ and NH$_3$ at the exit of the electrostatic precipitator and that of SO$_2$ and NH$_3$ at the exit of the bag filter, it is evident that reaction of SO$_2$ and NH$_3$ occurred at the bag filter and that these noxious ingredients were further removed. This is a surprising result. This is understood to be because the solid particles collected upon the bag filter effectively adsorb the non-reacted SO$_2$ and NH$_3$ and the reaction of SO$_2$ and NH$_3$ is enhanced by utilizing the solid particles.

## Claims

1. A process of purifying an exhaust gas containing at least one of SO$_x$ and NO$_x$ ingredients which comprises:
   - adding ammonia into such a gas;
   - irradiating said mixture with ionizing radiation or ultraviolet light, whereby producing a resultant gas containing particulate products;
   - passing said resultant gas initially through an electrostatic precipitator at a gas flow speed of about 1 to 3 m/sec., and
   thereafter through a mechanical filter at a speed of about 0.3 to 2 m/min., thereby reacting residual non-reacted SO$_x$ ingredient with residual ammonia to produce additional particles;
   - releasing the gas, containing a reduced particle content to the atmosphere.

2. An exhaust gas treatment apparatus for an exhaust gas containing SO$_x$ and/or NO$_x$ comprising:
   means (4,5) for irradiating the exhaust gas with ionizing radiation or ultraviolet light in the presence of ammonia to produce particulates;
   an electrostatic precipitator (7) connected to said means (4,5) for irradiation wherein the exhaust gas speed in the electrostatic precipitator is about 1 - 3 m/sec.;
   a mechanical filter (8) connected to and arranged downstream of said electrostatic precipitator (7) wherein the exhaust gas speed in the mechanical filter (8) is about 0.3 to 2 m/min. and
   means (10) for releasing the gas to the atmosphere.

## Patentansprüche

1. Verfahren zum Reinigen eines Abgases, welches mindestens eine der Substanzen SO$_x$ und NO$_x$ enthält, bei dem
   - Ammoniak einem derartigen Gas zugegeben wird;
   - die Mischung mit ionisierender Strahlung oder ultraviolettem Licht behandelt wird, wodurch ein Gas erzeugt wird, das teilchenförmige Produkte enthält;
   - das resultierende Gas zuerst mit einer Gasströmungsgeschwindigkeit von etwa 1 bis 3 m/s durch einen elektrostatischen Abscheider geführt wird und
   danach mit einer Geschwindigkeit von 0,3 bis 2 m/min durch einen mechanischen Filter geführt wird, wodurch restliche nichtreagierte SO$_x$-Bestandteile mit restlichem Ammoniak zur Erzeugung von zusätzlichen Teilchen umgesetzt werden;
   - das Gas, welches einen reduzierten Teilchengehalt aufweist, zur Atmosphäre abgelassen wird.

5

**2.** Abgasbehandlungsvorrichtung für ein Abgas, welches SO$_x$ und/oder NO$_x$ enthält, mit

Mitteln (4,5) zum Bestrahlen des Abgases mit ionisierender Strahlung oder ultraviolettem Licht in Gegenwart von Ammoniak zur Erzeugung von Makroteilchen;

einem an die Mittel (4,5) zur Bestrahlung angeschlossenen elektrostatischen Abscheider (7), wobei die Abgasgeschwindigkeit im elektrostatischen Abscheider etwa 1 - 3 m/s beträgt;

einem mechanischen Filter (8), der mit dem elektrostatischen Abscheider (7) verbunden und an dessen stromabwärts liegenden Seite angeordnet ist, wobei die Abgasgeschwindigkeit in dem mechanischen Filter (8) etwa 0,3 bis 2 m/min beträgt, und

Mitteln (10) zum Freilassen des Gases zur Atmosphäre.

## Revendications

**1.** Procédé pour purifier un gaz d'échappement contenant au moins un ingrédient de SO$_x$ et de NO$_x$ qui comporte :

- l'adjonction d'ammonium dans un tel gaz ;
- l'irradiation dudit mélange par une radiation ionisante ou de lumière ultra-violette produisant ainsi un gaz résultant contenant des produits en particules ;
- le passage dudit gaz résultant d'abord à travers un précipitateur électrostatique à une vitesse de débit de gaz d'environ 1 m/sec à 3 m/sec, et

ensuite à travers un filtre mécanique à une vitesse d'environ 0,3 m/mn à 2 m/mn en amenant à réagir l'ingrédient SO$_x$ résiduel qui n'a pas réagi avec l'ammonium résiduel pour produire des particules supplémentaires ;

- dégageant le gaz contenant un contenu de particules réduit à l'atmosphère.

**2.** Appareil de traitement de gaz d'échappement contenant des SO$_x$ et/ou NO$_x$, comportant :

des moyens (4, 5) pour irradier le gaz d'échappement au moyen d'une radiation ionisante ou d'une lumière ultra-violette en présence d'ammonium pour produire des particules ;

un précipitateur (7) électrostatique relié auxdits moyens (4, 5) pour l'irradiation, dans lequel le débit des gaz d'échappement dans le précipitateur électrostatique est d'environ 1 m/sec à 3 m/sec ;

un filtre mécanique (8) raccordé et disposé en aval dudit précipitateur (7) électrostatique dans lequel le débit du gaz d'échappement dans le filtre mécanique (8) est environ de 0,3 m/mn à 2 m/mn, et

des moyens (10) pour dégager le gaz dans l'atmosphère.

# Fig. 1

# Fig. 2